# EUROPÄISCHE PATENTSCHRIFT

(11) **EP 3 097 298 B1**
(45) Veröffentlichungstag und Bekanntmachung des Hinweises auf die Patenterteilung: **17.06.2020**
(21) Anmeldenummer: 15710587.5
(22) Anmeldetag: 20.01.2015
(51) Int. Cl.: F02F 1/42, F02B 77/04

(54) **GUSSTEIL UND EINSATZ FÜR EIN SOLCHES GUSSTEIL**
CAST PART AND INSERT FOR SUCH A CAST PART
PIÈCE COULÉE ET INSERT DESTINÉ À UNE TELLE PIÈCE COULÉE

(30) Priorität: 20.01.2014 DE 102014100568
(43) Veröffentlichungstag der Anmeldung: 30.11.2016
(73) Patentinhaber: Nemak, S.A.B. de C.V., 66000 García, Nuevo León (MX)
(72) Erfinder: MEISHNER, Henning, 38855 Wernigerode (DE); GOSCH, Rolf, 4600 Thalheim bei Wels (AT); BRETSCHNEIDER, Annett, 08297 Zwönitz (DE); KÜHN, Wolfgang, 08315 Lauter-Bernsbach (DE)
(74) Vertreter: Cohausz & Florack
(86) Internationale Anmeldenummer: PCT/IB2015/000052
(87) Internationale Veröffentlichungsnummer: WO 2015/107417

(56) Entgegenhaltungen:
- EP-A1- 2 837 809
- DE-A1- 3 915 988
- DE-A1-102011 018 281
- DE-U1-202010 018 001
- FR-A1- 2 470 257
- JP-A- S4 869 915
- US-A- 4 346 556

## Beschreibung

Die Erfindung betrifft ein Gussteil, das aus einem Gussmaterial gegossen ist und in das ein im Betrieb von Gas durchströmter Kanal eingeformt ist, wobei der Kanal zumindest abschnittsweise durch einen separat vorgefertigten und in das Gussteil eingegossenen Einsatz umgrenzt ist.

Ein solches Gussteil ist beispielsweise aus der DE 2 602 434 A1 bekannt. Bei dem betreffenden Gussteil handelt es sich um einen aus einer Aluminiumgusslegierung gegossenen Zylinderkopf für einen Verbrennungsmotor. Der Abgaskanal des Zylinderkopfes ist dabei durch einen in den Zylinderkopf eingegossenen rohrförmigen Einsatz aus dünnem Blech ummantelt.

Die Ummantelung des Abgaskanals ist bei dem bekannten Zylinderkopf so ausgeführt, dass zwischen dem Gussmaterial und dem Blechmaterial des Einsatzes zumindest abschnittsweise kein direkter thermisch leitender Kontakt besteht. Auf diese Weise wird einerseits das Al-Gussmaterial gegen das heiße, im Einsatz durch den Abgaskanal des Zylinderkopfs abströmende Abgas abgeschirmt. Andererseits erreicht der Blechmantel aufgrund des eingeschränkten thermisch leitenden Kontakts zu dem ihn umgebenden Gusswerkstoff und der damit einhergehenden geringeren Isolierung deutlich höhere Temperaturen als das übrige Zylinderkopfvolumen. Dadurch soll sich eine bessere Nachreaktion der Verbrennungsgase im Abgaskanal ergeben, die wiederum zu einer Verminderung des Schadstoffausstoßes führen soll.

Um die Isolierung des Blecheinsatzes gegenüber dem Gussmaterial des bekannten Zylinderkopfes zu verbessern, kann an der Außenseite des Einsatzes eine Keramikschicht aufgetragen sein. Alternativ oder ergänzend ist es auch möglich, den Blecheinsatz des bekannten Zylinderkopfes doppelwandig unter Ausbildung eines wärmeisolierenden Luftspalts zwischen den Blechen auszuführen.

Eine andere Möglichkeit, den Wärmeübergang zwischen einem durch einen Auslasskanal eines Zylinders strömenden heißen Abgas und dem Leichtmetall-Gussmaterial des Zylinders einzuschränken, ist in der DE 37 11 433 A1 am Beispiel eines Zylinders für einen Zweitaktmotor erläutert. Gemäß diesem Stand der Technik wird der Auslasskanal mit einem Keramikteil ausgekleidet, welches ein deutlich geringeres Wärmeleitvermögen aufweist als Leichtmetall-Guss.

Des Weiteren ist es aus der DE 10 2010 025 286 A1 bekannt, dass sich die Innenflächen von Abgaskanälen von Leichtmetallgussteilen, wie beispielsweise Zylinderköpfen, für Verbrennungsmotoren, dadurch effektiv gegen eine thermische Überbeanspruchung schützen lassen, dass sie zumindest abschnittsweise mit einer Beschichtung belegt werden, die aus einem Glasmaterial gebildet ist. Bei der praktischen Nutzung dieses Vorschlags ergibt sich eine besondere Herausforderung dadurch, dass die Beschichtung einerseits den im Betrieb auftretenden mechanischen und thermischen Belastungen sicher standhalten muss und andererseits eine mechanische Bearbeitung von an den beschichteten Flächenabschnitt angrenzenden Abschnitten des jeweiligen Bauteils ohne die Gefahr eines Abplatzens der Beschichtung zulassen muss.

Darüber hinaus ist es aus der DE 39 15 988 A1 bekannt, einen aus Blech gefertigten, für einen Zylinderkopf vorgesehenen Kanaleinsatz an seiner dem Gussmaterial zugeordneten Außenseite mit einer Emaillebeschichtung zu versehen. Diese Emaillebeschichtung soll als wärmeisolierende Schicht wirken und kann nach dem Einguss des Kanaleinsatzes in das Gussteil zerbrechen. Durch das nachträgliche Brechen der ursprünglich auf dem Kanaleinsatz angeordneten Emaille-Schicht soll deren isolierende Wirkung nicht beeinträchtigt werden.

Ein Kanaleinsatz ist auch aus JP S48 69915 A bekannt.

In der EP 2 837 809 A1 (Stand der Technik gemäß Art. 54(3) EPÜ) ist schließlich ein Zylinderkopf beschrieben, der einen in ihn eingegossenen Blechmantel umfasst. Die Außenfläche oder die Innenfläche des Blechmantels kann dabei eine Beschichtung aufweisen, die beispielsweise aus einem Emailmaterial gebildet sein kann.

Vor dem Hintergrund des voranstehend erläuterten Standes der Technik bestand die Aufgabe der Erfindung darin, ein Gussteil der voranstehend erläuterten Art so zu verbessern, dass es auch höchsten thermischen und mechanischen Belastungen im Bereich seines gasführenden Kanals sicher standhält und dabei sicher an das Gussteil angebunden ist. Darüber hinaus sollte ein Mittel angegeben werden, welches es auf ebenso einfache Weise ermöglicht, Gussteile der eingangs erläuterten Art für diesen Zweck zu ertüchtigen.

Diese Aufgabe ist hinsichtlich des Gussteils erfindungsgemäß durch die in Anspruch 1 angegebene Gestaltung eines solchen Gussteils gelöst worden.

Hinsichtlich des Mittels besteht die erfindungsgemäße Lösung der voranstehend angegebenen Aufgabe in einem gemäß Anspruch 7 ausgebildeten Einsatz.

Vorteilhafte Ausgestaltungen der Erfindung sind in den abhängigen Ansprüchen angegeben und werden nachfolgend wie der allgemeine Erfindungsgedanke im Einzelnen erläutert.

Ein erfindungsgemäßes Gussteil ist demgemäß aus einem Gussmaterial gegossen und hat einen im Betrieb von Gas durchströmten Kanal, der zumindest abschnittsweise durch einen separat vorgefertigten und in das Gussteil eingegossenen Einsatz umgrenzt ist. Erfindungsgemäß ist dabei der für ein erfindungsgemäßes Gussteil vorgesehene Einsatz an seiner dem Gas zugeordneten Innenfläche und an seiner dem Gussmaterial zugeordneten Außenfläche zumindest jeweils abschnittsweise mit jeweils einer Glasur- oder Emailleschicht beschichtet.

Unter den Begriff "Glasur- oder Emailleschicht" fallen nach dem Verständnis der Erfindung Schichten, die aus anorganischen Verbindungen gebildet sind, welche aus miteinander verschmolzenen Oxiden, wie SiO₂, Al₂O₃, B₂O₃, Li₂O, Na₂O usw. bestehen. Dabei können die Schichten zusätzlich anorganische oder organische Verbindungen in Form von Fasern, wie z. B. SiC- oder C-Fasern, enthalten. Bei der Herstellung der Glasur- oder Emailleschichten werden die vorgeschmolzenen Verbindungen mit Wasser aufgemahlen. Anschließend werden optional die Fasern zugemischt. Der jeweils so erhaltene Schlicker wird auf den Einsatz aufgebracht und zu der jeweiligen Glasur- oder Emailleschicht eingebrannt.

Die erfindungsgemäß auf die im Gebrauch von Gas überstrichene Innenfläche des Einsatzes aufgetragene Glasur- oder Emailleschicht schützt den Einsatz gegen einen chemischen Angriff oder thermische Belastung durch das Gas, dem die betreffende Innenfläche im Gebrauch ausgesetzt ist. So kann die Glasur- oder Emailleschicht einen Korrosionsschutz darstellen, der den Einsatz gegen ein chemisch aggressives gasförmiges Medium schützt.

Alternativ oder ergänzend kann die Glasur- oder Emailleschicht auch einen Hitzeschutzschild bilden, durch den eine übermäßige Erwärmung des Einsatzes auch dann unterbunden wird, wenn der Einsatz im Betrieb von einem sehr heißen Gas angeströmt wird.

Der hierfür typische Anwendungsfall ist ein als Gussteil hergestellter Zylinderkopf für einen Verbrennungsmotor, in dessen Abgaskanal ein in erfindungsgemäßer Weise beschichteter Einsatz eingegossen ist. Genauso eignet sich die Erfindung auch für ein Gehäuse für einen Turbolader, der im Abgasstrom eines Verbrennungsmotors angeordnet ist und dessen von Abgas durchströmten Kanal ein in erfindungsgemäßer Weise beschichteter Einsatz zugeordnet ist.

Die an der dem Gussmaterial zugewendeten Außenfläche des Gussteils angeordnete Glasur- oder Emailleschicht sichert einerseits eine optimale Anbindung des jeweiligen Einsatzes an das Gussmaterial. So haftet die Glasur- oder Emailleschicht fest auf dem durch den Einsatz gebildeten Substrat und bietet an ihrer freien Außenseite eine Anschlussfläche, über die eine feste Verbindung zwischen Gusswerkstoff und Einsatz hergestellt wird. Dabei können zur Erhöhung der Wärmeisolierung der Schicht Stoffe beigemischt werden, die beim Eingießprozess verbrennen. Die als Verbrennungsprodukte anfallenden Gase bilden in der Glasur- oder Emailleschicht viele kleine mit Gas gefüllte Kammern und Kanäle, durch deren Anwesenheit die Wärmeleitfähigkeit der Schicht herabgesetzt und damit einhergehend deren wärmeisolierende Wirkung verstärkt wird. Durch die Verwendung von Stahl oder anderen vergleichbar schlecht wärmeleitenden Werkstoffen für die Herstellung des Grundsubstrats eines erfindungsgemäßen Einsatzes kann die Isolierwirkung weiter unterstützt werden. Andererseits bildet die erfindungsgemäß aufgebrachte Außenschicht auch eine thermische Isolierung zwischen dem Einsatz und dem umgebenden Gussmaterial, durch die der Wärmefluss vom Einsatz in das Gussmaterial unterbrochen wird. Wird der erfindungsgemäße Einsatz in einem Gussteil vorgesehen, in dem seine Innenfläche im Gebrauch von einen Heißgas angeströmt wird, so bewirkt die erfindungsgemäß an der Außenfläche des Einsatzes vorgesehene Glasur- oder Emailleschicht folglich, dass sich das Gussmaterial in der Umgebung des Einsatzes deutlich weniger erwärmt als dies bei einer direkten Anströmung durch Heißgas der Fall wäre.

Ein weiterer Vorteil der Erfindung besteht darin, dass ein erfindungsgemäßer Einsatz im Fall, dass sein die jeweiligen Schichten tragender Grundkörper aus Metall hergestellt ist, aufgrund der Schutzwirkung der auf ihn aufgetragenen Glasur- oder Emailleschichten deutlich dünner oder aus einem schwächeren Material ausgeführt sein kann als im Fall, dass er direkt der Einwirkung durch das Gas ausgesetzt wäre.

Insbesondere sind bei einer erfindungsgemäßen Ausgestaltung eines Gussteils keine aufwändigen, beispielsweise doppelwandig ausgeführten Blechkonstruktionen oder sonstige konstruktive Maßnahmen mehr erforderlich, um durch Ausbildung eines Luftspalts zwischen dem jeweils abzuschirmenden Kanal und dem Gussmaterial des Gussstücks die gewünschte wärmeisolierende Wirkung zu erzielen.

Stattdessen kann es sich bei dem erfindungsgemäß in das Gussteil einzugießenden Einsatz um ein einfaches Bauteil handeln, dessen Grundkörper beispielsweise durch ein geeignetes konventionelles Umformverfahren aus einem Blechzuschnitt geformt oder in jeder anderen geeigneten Weise hergestellt werden kann. So kann es beispielsweise bei einer komplexen Formgebung des durch den Einsatz abzuschirmenden Kanals des Gussteils zweckmäßig sein, den Grundkörper des Einsatzes in einem Urformverfahren, beispielsweise durch Gießen, Schmieden, Extrudieren oder desgleichen, zu formen. Jeder der genannten Herstellungswege erlaubt die Herstellung von rohrförmigen Einsätzen, die den jeweils zu schützenden Kanal vollständig ummanteln.

Eine thermisch besonders hoch belastbare Ausgestaltung der Erfindung ergibt sich dann, wenn der Grundkörper des Einsatzes aus einem Metallwerkstoff besteht, der einen höheren Schmelztemperaturbereich aufweist als das metallische Gussmaterial, aus dem das Gussteil gegossen ist. So eignet sich für die Herstellung des Einsatz-Grundkörpers insbesondere ein warmfester, korrosionsbeständiger Stahl. Bei einer Herstellung aus Blech kann es, abhängig von der jeweiligen Komplexität des Verlaufs und der Form des jeweils zu schützenden Gussteilkanals vorteilhaft sein, wenn das Blechformteil aus zwei oder mehr Einzelteilen zusammengesetzt ist.

Soll ein Einsatz mit besonders geringem Gewicht für den erfindungsgemäßen Zweck bereitgestellt werden, so kann der Grundkörper des Einsatzes beispielsweise auch aus einem Metallschaum, insbesondere einem Leichtmetallschaum hergestellt werden. Neben seinem minimierten Gewicht hat ein aus Schaum erzeugter Einsatz eine hohe Formsteifigkeit und bietet zudem eine zusätzliche thermisch isolierende Wirkung.

Gegenüber der Herstellung von solchen Gussteilen, bei denen der jeweils zu schützende Kanal an seiner Innenfläche unmittelbar mit einer schützenden Schicht belegt wird, hat die Erfindung den wesentlichen Vorteil, dass der erfindungsgemäße Einsatz nicht nur separat vorgeformt, sondern auch schon mit den erfindungsgemäß vorgesehenen Beschichtungen versehen werden kann, bevor er in das Gussteil eingegossen wird. Dementsprechend kann auch der Beschichtungsvorgang auf einfache Weise in dafür spezialisierten Fabrikationsbetrieben ohne Rücksicht auf möglicherweise negative Einflüsse vorgenommen werden, die die für die Erzeugung der Beschichtung notwendigen Arbeitsschritte auf das Gussteil haben könnten. Dies erweist sich insbesondere vor dem Hintergrund als vorteilhaft, dass die erfindungsgemäß als Beschichtung vorgesehenen Schichten in der Regel bei vergleichbar hohen Temperaturen eingebrannt werden müssen, bei denen es bereits zu einer Beeinflussung des Gefüges des Gussteils kommen kann. Durch den erfindungsgemäßen Weg über einen vorbeschichteten und dann in das Gussteil eingegossenen Einsatz können die Vorteile von Schichten ohne diese Gefahr genutzt werden.

Besonders geeignet ist die Erfindung daher für Gussteile, die aus Leichtmetall oder einer Leichtmetalllegierung bestehen. So lassen sich in erfindungsgemäßer Weise insbesondere Gussteile für den Einsatz unter thermisch und mechanisch hoch belasteten Bedingungen ertüchtigen. Bei den erfindungsgemäß beschaffenen Gussteilen handelt es sich demgemäß insbesondere um Zylinderköpfe, Turboladergehäuse und vergleichbare Bauteile von Verbrennungsmotoren, wobei sich insbesondere die Heißgas führenden Kanäle dieser Gussteile in erfindungsgemäßer Weise dadurch schützen lassen, dass im Bereich der betreffenden Heißgaskanäle jeweils ein in erfindungsgemäßer Weise beschichteter Einsatz vorgesehen ist.

Bei den erfindungsgemäß an die Innen- und Außenfläche des Einsatzes aufgebrachten Beschichtungen handelt es sich typischerweise um Glasuren oder Emaillebeschichtungen. Die Auswahl des jeweiligen Beschichtungswerkstoffs sollte unter Berücksichtigung des Materials erfolgen, aus dem der zu beschichtende Einsatz gefertigt ist. Besteht der Einsatz aus einem Leichtmetallwerkstoff, so kann eine Aluminiumemaille verwendet werden, die grobe Zusätze an z. B. Korund, Quarz, Siliziumkarbid oder Wolframoxid in Gehalten von 1 - 20 Gew.-% besitzt. Besteht der Einsatz dagegen aus einem Stahlwerkstoff, so können Stahlemaillen verwendet werden, die ebenfalls Zusätze an feuerfesten Stoffen, wie Cr₂O₂, SiO₂, Al₂O₃, WO₃ in Gehalten von 1 - 20 Gew.-% aufweisen. Zur Erhöhung der Temperaturwechselbeständigkeit können die jeweils verwendeten Emaillen auch hier 0,2 - 10 Gew.-% Fasern anorganischer oder organischer Zusammensetzung enthalten.

In Bezug auf die erfindungsgemäße Beschichtung der Außenfläche des Einsatzes haben praktische Versuche überraschend ergeben, dass sich eine intensive stoffschlüssige Anbindung des Gussmaterials an die fest auf dem Einsatz haftende Beschichtung ergibt, wenn als Beschichtungsmaterial eine Emaille eingesetzt und als Gussmaterial eine konventionelle Al-Gusslegierung verwendet wird. Hier scheinen sich zwischen dem Beschichtungsmaterial und dem Gussmaterial intermetallische Phasen zu bilden, die für eine feste Anhaftung des Gussmaterials an dem Beschichtungsmaterial und damit einhergehend über die durch das Beschichtungsmaterial erzeugte Verbindung für eine in gleicher Weise feste Fixierung des Einsatzes in dem Gussteil sorgen.

Im Fall, dass für die Beschichtung der Innenfläche eine Emaille verwendet werden soll, eignet sich hierzu eine Emaille, die in konventioneller Weise auf Basis eines Glaspulvers hergestellt ist. Ist der den jeweiligen Kanal des Gussteils schützende Einsatz aus einem Leichtmetallwerkstoff hergestellt, so wird eine Aluminiumemaille, der Borsäure, Kalilauge und Wasserglas zugesetzt sind und die die voranstehend schon aufgezählten feuerfesten Stoffe enthalten kann, zusammen mit Wasser zu einem verwendungsfähigen Schlicker vermahlen. Ist dagegen der Einsatz aus einem Stahlwerkstoff hergestellt, so werden der Stahlemaille neben den feuerfesten Stoffen noch Ton und geringe Mengen Elektrolyte sowie Wasser zugegeben und der daraus gebildete Schlicker in der üblichen Art und Weise auf den Einsatz aufgebracht und eingebrannt. Neben silikatischen Emaillen können auch Phosphatemaillen, Zirkonemaillen oder Abwandlungen davon für die erfindungsgemäßen Zwecke verwendet werden. Dem jeweils verwendeten Glaspulver können auf 100 Teile Glasfritte 10 - 21 Teile Korund oder eine entsprechende Menge eines Stoffs mit einem vergleichbar hohen Schmelzpunkt zugegeben werden, um die Hitzebeständigkeit der Beschichtung der Innenfläche zu maximieren.

Wenn hier von "Teilen" als Dosiermaß die Rede ist, so wird darunter verstanden, dass die dem Emaillepulver zugegebene Menge an dem jeweiligen Bestandteil mithilfe eines für alle Bestandteile gleichen Einheitsmaß abgemessen wird und die erfindungsgemäß für die einzelnen Bestandteile jeweils vorgesehenen "Teile" das jeweilige Vielfache dieses Einheitsmaßes bezeichnen.

Ein für die Erzeugung einer derartigen Emailleschicht geeignetes Pulver ist in der bisher unveröffentlichten deutschen Patentanmeldung DE 10 2013 108 429.1 beschrieben, deren Inhalt hiermit in die Offenbarung der vorliegenden Anmeldung einbezogen wird. Das in der betreffenden deutschen Patentanmeldung angegebene Emaillepulver ist zum Belegen von im Betrieb thermisch und mechanisch hoch belasteten metallischen Flächen besonders geeignet und liegt als Mischung vor, die 100 Teile eines Glaspulvers, optional 10 - 22 Teile grobe Glaskörner, die größer sind als die Partikel des Glaspulvers, 0,1 - 7,5 Teile keramische Fasern, Glasfasern oder Kohlefasern, sowie alternativ zueinander oder in Kombination miteinander 10 - 21 Teile einer pulverförmig vorliegenden oxidischen Verbindung eines Leichtmetalls oder 1 - 5 Teile eines Pulvers eines Schwermetalls enthält.

Wie in der deutschen Patentanmeldung beschrieben, kommen den einzelnen Bestandteilen des erfindungsgemäßen Emaillepulvers dabei folgende Bedeutungen zu:

### a) Glaspulver

Das Glaspulver ist die Grundlage des betreffenden Emaillepulvers und bildet bei der erfindungsgemäß beschaffenen, auf dem jeweiligen Flächenabschnitt des Metallbauteils erzeugten Emaillebeschichtung die Matrix, in der die anderen Bestandteile des Emaillepulvers eingelagert sind.

Als Glaspulver lassen sich dabei die im Stand der Technik hierzu üblicherweise verwendeten Glassorten nutzen. Dabei eignen sich für die Erfindung Glaspulver aus Gläsern, die einen niedrigeren Ausdehnungskoeffizienten haben als das Trägermaterial, an dem der Flächenabschnitt vorhanden ist, der mit der durch das Emaillepulver gebildete Emaillebeschichtung jeweils belegt werden soll. Um im Zuge des Einbrennens der Emaillebeschichtung eine Beschädigung oder Verformung des jeweiligen Metallsubstrats zu vermeiden, sollte das aus solchen Gläsern erzeugte Glaspulver bei einer Temperatur schmelzen, die niedriger ist als der Temperaturbereich, in dem die Schmelztemperatur des jeweiligen Trägermaterials liegt.

Bei Anwendungen an Flächen von Verbrennungsmotorbauteilen, die aus Leichtmetallguss hergestellt und im Einsatz einem heißen Abgasstrom ausgesetzt sind, hat sich herausgestellt, dass eine auf Grundlage solcher Glaspulver erzeugte und im Übrigen zusammengesetzte Emaillebeschichtung auch dann noch den thermischen und mechanischen Belastungen sicher standhält und das Leichtmetallsubstrat zuverlässig schützt, wenn die Abgastemperatur sehr viel höher liegt als die Schmelztemperatur des Gusswerkstoffs und der Emaillebeschichtung selbst. Typische in Frage kommende Schmelztemperaturen des Glaspulvers liegen bei Anwendung auf Flächenabschnitten von Leichtmetallbauteilen im Bereich von 500 - 650 °C, insbesondere 540 - 580 °C.

Die Körnung (mittlerer Durchmesser) der Partikel des die Basis eines solchen Emaillepulvers bildenden Glaspulvers liegt typischerweise im Bereich von 5 - 40 µm, wobei sich Glaspulver mit einer Korngröße, die im Mittel 25 µm beträgt, in der Praxis als besonders geeignet herausgestellt haben.

### b) Grobe Glaskörner

10 - 22 Teile grobe Glaskörner können einem solchen Emaillepulver optional zugegeben werden, um der aus dem Emaillepulver erzeugten Emaillebeschichtung eine weiter verbesserte Beständigkeit gegen Rissbildung zu verleihen. Als "grobe Glaskörner" werden dabei solche Glaspartikel bezeichnet, die größer sind als die größten Partikel des Glaspulvers, das die Basis des Emaillepulvers bildet.

Typischerweise zählen hierzu somit Glaskörner mit einem mittleren Durchmesser von mehr als 40 µm. Dabei sollte der mittlere Durchmesser der groben Glaskörner 500 µm nicht überschreiten, um einer zu starken Vergröberung der mit einem solchen Emaillepulver erzeugten Beschichtung vorzubeugen.

Aufgrund ihres vergleichbar großen Volumens schmelzen die groben Glaskörner beim Einbrennen der Emaillebeschichtung nicht vollständig, sondern bleiben in ihrer Grundstruktur erhalten. Bilden sich im praktischen Gebrauch in der Emaillebeschichtung Risse, so stellen sich die in der Emaillebeschichtung vorhandenen Glaskörner der weiteren Ausdehnung der Risse nach Art einer Barriere entgegen, die vom jeweiligen Riss nicht überwunden werden kann. Auf diese Weise wird dem Fortschreiten des Risses wirksam entgegengewirkt und eine weitergehende Beschädigung der Beschichtung verhindert.

Als grobe Glaskörner können Glasteile verwendet werden, die zusammengesetzt sind wie das voranstehend genannte Emaillepulver. Die aus einem solchen Emaillepulver hergestellten groben Glaskörner weisen dann eine Zusammensetzung und Eigenschaften auf, die der Zusammensetzung und den Eigenschaften einer aus dem betreffenden Emaillepulver erzeugten Beschichtung entsprechen. Auf diese Weise ist sichergestellt, dass die erfindungsgemäß erzeugte Beschichtung trotz der Anwesenheit der groben Glaskörner weitestgehend homogene Eigenschaften und ein ebenso gleichmäßiges Verhalten besitzt. Als für ein solches Emaillepulver besonders geeignet haben sich solche groben Glaskörner erwiesen, die beim im Zuge der Herstellung von Emaillepulver der hier in Rede stehenden Art bereits als Fritte zugegeben werden. Solche gefritteten, d. h. nicht ganz durchgeschmolzenen Glaskörner haben sich in Bezug auf die Vermeidung größerer Rissbildung in durch das Emaillepulver erzeugten Emaillebeschichtungen als besonders effektiv erwiesen.

Damit die Wirkung der groben Glaskörner mit der gewünschten Zuverlässigkeit eintritt, enthält das Emaillepulver 10 - 22 Teile an diesen Glaskörnern, wobei sich eine optimale Wirkung einstellt, wenn mindestens 15 Teile grobe Glaskörner dem Emaillepulver zugegeben werden.

### c) Keramische Fasern, Glasfasern oder Kohlefasern

Den in einem voranstehend genannten Emaillepulver vorhandenen Fasern kommt eine besondere Bedeutung zu. Sie stellen sicher, dass eine aus dem Pulver gebildete Emaillebeschichtung auch unter den hohen Spannungen sicher zusammenhält, die sich durch die im praktischen Einsatz auftretenden Temperaturschwankungen und mechanischen Druckbelastungen ergeben können.

Um diese Funktion zu erfüllen, sind in einem Emaillepulver der hier in Rede stehenden Art 0,1 - 7,5 Teile, insbesondere mindestens 2 Teile oder mindestens 3,5 - 7,5 Teile, an keramischen Fasern, Glasfasern oder Kohlefasern vorhanden, wobei die keramischen Fasern, Glasfasern und die Kohlefasern jeweils alleine oder auch als Mischung zugegeben werden können. Optimale Wirkungen ergeben sich dann, wenn 4 - 6 Teile an Fasermaterial in dem Pulver vorhanden sind. Grundsätzlich kommen für das Emaillepulver keramische Fasern, Glasfasern oder Kohlenstofffasern mit einer Faserlänge von 10 - 9000 um in Frage. Dabei erweist sich eine große Faserlänge als günstig in Bezug auf den Zusammenhalt der aus einem Emaillepulver gebildeten Emaillebeschichtung, kann jedoch die Verarbeitbarkeit beeinträchtigen. Bei einer Faserlänge von weniger als 10 µm ist die verstärkende Wirkung zu schwach. Als ausreichend wirksam und gleichzeitig eine gute Verarbeitbarkeit gewährleistend haben sich Fasern erwiesen, die eine Länge von 10 - 1000 µm besitzen.

Als Kohlefasern können handelsübliche Fasern zum Einsatz kommen. Gleiches gilt für die keramischen Fasern und Glasfasern, wobei hier beispielhaft SiC-Fasern oder Glasfasern unterschiedlicher Zusammensetzung zu nennen sind.

### d) Oxidische Verbindungen eines Leichtmetalls oder Pulver eines Schwermetalls

Pulverförmig vorliegende oxidische Verbindungen eines Leichtmetalls oder Pulver eines Schwermetalls können gleichzeitig oder alternativ im Emaillepulver vorhanden sein, um den Schmelzpunkt der aus dem Emaillepulver gebildeten Beschichtung in Bereiche zu verschieben, die im Hinblick auf den jeweiligen Einsatzzweck unkritisch sind.

Auf diesem Weg lassen sich auch an Leichtmetallbauteilen Emaillebeschichtungen erzeugen, die bei im Hinblick auf die Schmelztemperatur des jeweiligen Leichtmetallwerkstoffs unkritischen Einbrennbedingungen entstehen, im praktischen Einsatz jedoch so temperaturbeständig sind, dass sie den dabei auftretenden Maximaltemperaturen sicher standhalten.

Um diesen Effekt zu erreichen, enthält das Emaillepulver 10 - 21 Teile, insbesondere 12 - 17 Teile, einer pulverförmig vorliegenden oxidischen Verbindung eines Leichtmetalls und/oder 1 - 5 Teile, insbesondere 2 - 4 Teile, eines Pulvers eines Schwermetalls.

Als "Leichtmetalle" werden hier Metalle mit einer Dichte von weniger als 5 g/cm³ verstanden. Hierzu zählen insbesondere Al, Ti und Mg.

Aufgrund ihres hohen Schmelzpunkts von mehr als 2000 °C eignen sich von den Oxiden dieser Leichtmetalle insbesondere Al-Oxide für die Verwendung in dem Emaillepulver. Jedoch können insbesondere bei einer Beschichtung von Leichtmetallbauteilen auch andere Leichtmetall-Oxid-Pulver, wie Pulver aus Ti-Oxid und desgleichen, zum Einsatz kommen, deren Schmelzpunkt jeweils immer noch mehr als 1000 °C beträgt und damit deutlich über dem Schmelztemperaturbereich des Leichtmetallsubstrats liegt.

Optimale Einflüsse der jeweils vorgesehenen Leichtmetalloxide auf die Eigenschaften einer aus dem Emaillepulver erzeugten Emaillebeschichtung stellen sich dann ein, wenn die Leichtmetalloxide in Mengen von bis zu 30 % bezogen auf die Menge des aus dem Emaillepulver gebildeten amorphen Beschichtungsmaterials vorhanden sind.

Als "Schwermetall" werden hier alle Metalle und deren Legierungen angesehen, die eine Dichte von mindestens 5 g/cm³ besitzen. Hierzu zählen sämtliche eisenbasierte Werkstoffe, insbesondere Metallpulver aus legierten Stählen. Metallpulver, die aus Edelstahl, wie beispielsweise aus den unter den Bezeichnungen "V2A" und "V4A" bekannten, unter den Werkstoffnummern 1.4301 und 1.4401 genormten Stählen X5CrNi18-10 und X5CrNiMo17-12-2,, bestehen, haben sich als besonders geeignet herausgestellt. Auch hier erweist es sich als vorteilhaft, wenn der Schmelzpunkt des jeweiligen Metallpulvers mehr als 1000 °C beträgt, damit es zu keiner Veränderung der Eigenschaften des Metallpulvers während des Einbrennens kommt.

Optimale Einflüsse des Metallpulvers auf die Eigenschaften einer aus dem Emaillepulver erzeugten Emaillebeschichtung stellen sich dann ein, wenn die Metallpulver der schweren Metalle oder deren Legierungen in Mengen von bis zu 10 % bezogen auf die Menge des amorphen Beschichtungsmaterials vorhanden sind.

Der mittlere Durchmesser der dem Emaillepulver zugegebenen Körner des jeweiligen Metallpulvers oder der jeweils pulverförmigen Oxide eines Leichtmetalls sollte typischerweise im Bereich von 10 - 500 µm liegen.

### e) Weitere Bestandteile

Neben den voranstehend erläuterten Bestandteilen können im Emaillepulver optional selbstverständlich weitere Hilfsstoffe vorhanden sein, wie sie zur Herstellung einer Emailleschicht typischerweise benötigt werden. Hierzu zählen z. B. Borsäure, Kalilauge, Wasserglas oder demineralisiertes Wasser.

Grundsätzlich ist es möglich, die Innenbeschichtung und die Außenbeschichtung eines erfindungsgemäßen Einsatzes gleich auszubilden. Dies kann dann zweckmäßig sein, wenn eine Beschichtung zur Verfügung steht, die einerseits ausreichend beständig ist, um die vom den jeweils zu schützenden Kanal durchströmenden Gas ausgehenden Angriffen zu widerstehen und anderseits eine gute Anbindung des Gussmaterials bei gleichzeitig isolierender Wirkung gewährleistet.

In vielen Fällen wird es jedoch zweckmäßig sein, die der Innenfläche des Kanals zugeordnete Beschichtung anders auszuführen als die Beschichtung, die an der Außenseite des erfindungsgemäßen Einsatzes angeordnet wird. In der Praxis kann dies dadurch bewerkstelligt werden, dass die Schichten an der Innen- und der Außenfläche des Einsatzes sich hinsichtlich ihrer Zusammensetzung oder ihrer Struktur unterscheiden.

Unterschiedliche Eigenschaften der an der Innen- und Außenfläche des Einsatzes erfindungsgemäß vorgesehenen Beschichtungen können insbesondere dann sinnvoll sein, wenn das durch den Kanal strömende Gas heiß ist und die an der Innenfläche vorgesehene Beschichtung eine hohe thermische wie mechanische Widerstandsfähigkeit besitzen soll, wogegen die auf der Außenfläche des Einsatzes angebrachte Glasur- oder Emailleschicht eine optimale Isolierwirkung aufweisen soll.

Für Einsatzfälle, in denen eine hohe isolierende Wirkung der Beschichtung der dem Gussmaterial zugeordneten Außenseite zugeordneten Beschichtung gefordert wird, hat es sich als zweckmäßig erwiesen, wenn die an der Außenfläche vorgesehene Glasur- oder Emailleschicht gezielt mit einer hohen Porosität versehen wird. Die dann in der Außenfläche eingeschlossenen Gasblasen oder gasgefüllten Kanäle gewährleisten einen hohen Wärmeisolationswert der Außenschicht. Indem die Außenschicht im Bereich ihrer mit dem Gussmaterial in Kontakt kommenden Außenfläche zumindest abschnittsweise offenporig ausgebildet ist, wird zudem eine optimierte Anbindung des Einsatzes an das umgebende Gussmaterial erzielt. Dieses dringt beim Eingießen in die offenen Poren ein, so dass eine intensive formschlüssige Verklammerung des Gussmaterials mit dem fest auf dem Einsatz haftenden Beschichtungsmaterial erzielt wird.

Eine besonders kostengünstige Möglichkeit der Beschichtung eines erfindungsgemäßen Einsatzes ergibt sich dann, wenn der Grundkörper des Einsatzes aus mindestens zwei voneinander unabhängigen Teilen besteht, die jeweils unabhängig voneinander mit den Glasur- oder Emailleschichten beschichtet und anschließend zu dem Einsatz zusammengesetzt sind. Indem der Einsatz in zwei oder mehr Teile zerlegt ist, ist für den Beschichtungsprozess die Zugänglichkeit insbesondere der Innenflächen des Einsatzes vereinfacht, so dass schnell und unkompliziert ein gleichmäßiger Auftrag der Glasur oder Emaillebeschichtung vorgenommen werden kann.

Nachfolgend wird die Erfindung anhand einer ein Ausführungsbeispiel darstellenden Zeichnung näher erläutert. Es zeigen jeweils schematisch:

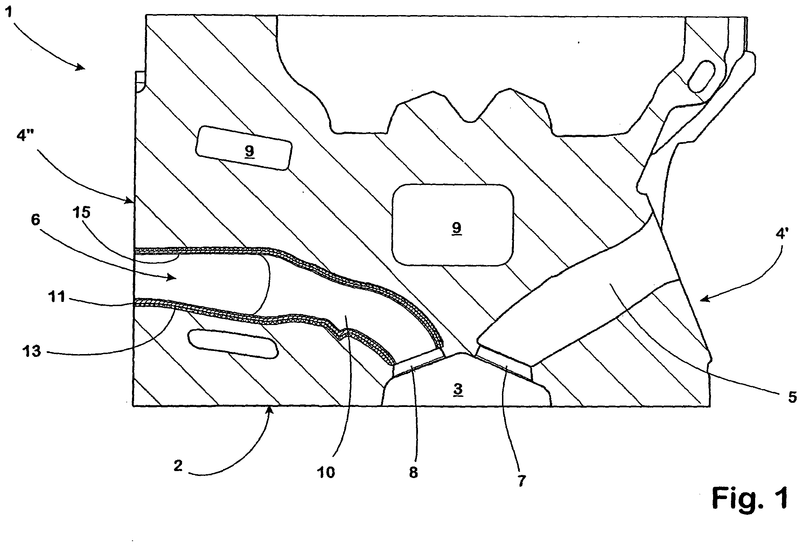

- Fig. 1: einen Ausschnitt eines Zylinderkopfs in einem quer zur Längserstreckung des Zylinderkopfs ausgerichteten Schnitt;

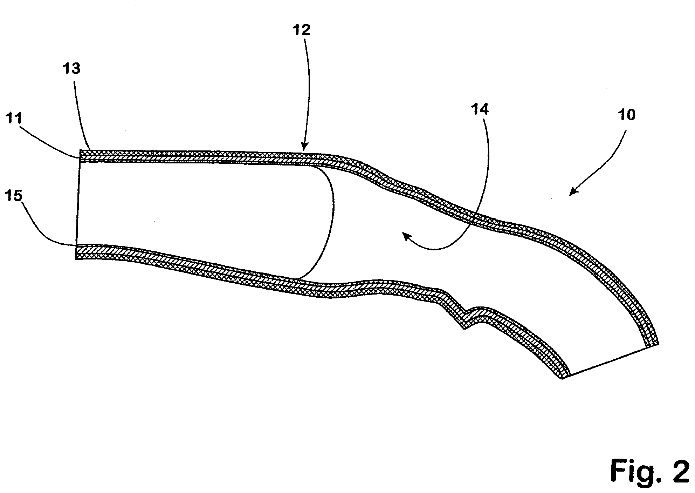

- Fig. 2: einen zum Einguss in den Zylinderkopf gemäß Fig. 1 vorgesehenen Einsatz in einer der Fig. 1 entsprechenden Schnittdarstellung.

Der aus einem für diese Zwecke üblicherweise verwendeten Aluminiumgusswerkstoff, beispielsweise einer AlSi-Legierung, gegossene Zylinderkopf 1 für einen Otto- oder Dieselmotor weist eine ebene Anlagefläche 2 auf, mit der er bei Gebrauch über eine gegebenenfalls zwischengelegte, hier nicht gezeigte Zylinderkopfdichtung auf einem hier ebenfalls nicht dargestellten Motorblock des jeweiligen Verbrennungsmotors liegt. Der Verbrennungsmotor weist dabei in Reihe angeordnete Verbrennungsräume und darin auf und ab bewegte, hier ebenfalls nicht sichtbare Kolben auf.

In die Anlagefläche 2 sind der Anzahl der Zylinder des Verbrennungsmotors entsprechend viele kalottenartig ausgebildete Ausnehmungen 3 eingeformt, die den in Hubrichtung der Kolben des Verbrennungsmotors oberen Abschluss der Verbrennungsräume des Verbrennungsmotors bilden.

In den Ausnehmungen 3 mündet jeweils ein von der einen Längsseite 4' (Einlassseite) des Zylinderkopfes 1 herangeführter Einlasskanal 5, über den im Betrieb das jeweilige Brennstoff-Luft-Gemisch in den Brennraum eingelassen wird. Gleichzeitig geht von der jeweiligen Ausnehmung 3 ein Auslasskanal 6 ab, der zur gegenüberliegenden Längsseite 4" (Auslassseite) des Zylinderkopfes 1 führt und über den das beim Verbrennungsvorgang anfallende Abgas aus dem Brennraum des Verbrennungsmotors abgeführt wird. Die Mündung 7 des Einlasskanals 5 und die Eingangsöffnung 8 des Auslasskanals 6 werden in Abhängigkeit vom Fortschritt des Verbrennungsprozesses in an sich bekannter Weise durch jeweils ein Ventil freigegeben bzw. verschlossen. Die betreffenden Ventile sind hier der Übersichtlichkeit halber nicht dargestellt. Im Bereich der Mündung 7 und der Eingangsöffnung 8 ist in an sich bekannter Weise jeweils ein Sitz für die nicht dargestellten Ventile eingeformt.

Um die im Betrieb in Folge des Verbrennungsprozesses anfallende Wärme abzuführen, ist der Zylinderkopf 1 in an sich ebenfalls bekannter Weise von Kühlkanälen 9 durchzogen, durch die im Betrieb Kühlflüssigkeit strömt.

Der im Betrieb des Verbrennungsmotors von heißem Abgas durchströmte Auslasskanal 6 ist von einem rohrförmigen, in den Zylinderkopf 1 eingegossenen Einsatz 10 ummantelt, der einerseits bis zum Ventilsitz am Eingang 8 des Auslasskanals 6 bis zu dessen Ausgang an der Längsseite 4" führt.

Der Grundkörper 11 des Einsatzes 10 ist in konventioneller Weise aus zwei oder mehr miteinander verschweißten Blechteilen zusammengesetzt, die in ebenso konventioneller Weise durch eine Tiefziehoperation aus entsprechenden Blechplatinen geformt worden sind. Alternativ kann der Grundkörper 11 des Einsatzes 10 beispielsweise auch aus einem rohrförmigen Rohblechteil hergestellt sein, das durch Innenhochdruckumformen oder desgleichen in die erforderliche Form gebracht worden ist. Das Blechmaterial, aus dem der Grundkörper 11 des Einsatzes 10 besteht kann aus einem warmfesten, mechanisch hochbelastbaren Stahl bestehen, der in üblicher Weise durch Warm- und Kaltwalzen zu Blech verarbeitet worden ist. Die Dicke des Blechmaterials beträgt typischerweise 0,4 - 1,2 mm, insbesondere bis zu 0,9 mm.

An seiner dem Gussmaterial zugeordneten Außenfläche 12 trägt der Einsatz 10 eine silikatische Schicht 13, die den Grundkörper 11 des Einsatzes 10 über dessen Länge und Umfang vollständig bedeckt. Genauso ist die Innenfläche 14 des Grundkörpers 11 des Einsatzes 10 mit einer silikatischen Schicht 15 beschichtet. Sowohl bei der an der Außenfläche 12 vorhandenen Schicht 13 als auch die an der Innenfläche 14 vorhandene Schicht 15 handelt es sich jeweils um eine Emailleschicht. Die Schichten 13,15 sind dabei jeweils aus einem Emailleschlicker gebildet, der mit einer Dicke von 200 - 900 µm, insbesondere 400 - 500 µm, aufgetragen und anschließend im noch feuchten Zustand bei einer 520 - 550 °C betragenden Einbrenntemperatur zu der jeweiligen Schicht 13,15 gebrannt worden ist. Die Schichten 13,15 können dabei gleichzeitig durch Tauchen des Grundkörpers 11 in ein Schlickerbad oder nacheinander und unabhängig voneinander auf die jeweilige Innenfläche 14 und Außenfläche 12 aufgetragen werden.

Idealerweise erfolgt der Auftrag des Emailleschlickers ohne jede Vorbehandlung. Sofern der Oberflächenzustand des Grundkörpers 11 dies nicht zulässt, kann dem Auftrag der Emailleschlicker eine Oberflächenbehandlung des Grundkörpers 11 vorangehen, bei der die Innenfläche 14 und die Außenfläche 12 thermisch oder chemisch entfettet und anschließend chemisch passiviert werden. Erforderlichenfalls werden zusätzlich durch gezieltes Aufrauen der Innenflächen 14 und Außenfläche 12 dort vorhandene Oxidschichten aufgebrochen. Diese können dort insbesondere dann vorhanden sein, wenn der Grundkörper 11 nicht aus einem Stahlblech, sondern beispielsweise aus einem Al-Blech gefertigt ist.

Zur Herstellung des für die Erzeugung der Schicht 13 auf der Außenfläche 12 vorgesehenen Emailleschlickers werden
- 100,0: Teile Glaspulver, dessen Glaspartikel einen mittleren Durchmesser von 10 µm aufwiesen,
- 1 - 5: Teile Ruß,
- 2: Teile Borsäure,
- 1: Teil Kalilauge,
- 1: Teil Wasserglas,
- 47: Teile Wasser
miteinander zu den Emailleschlicker vermahlen.

Zur Herstellung des für die Erzeugung der Schicht 15 auf der Innenfläche 14 vorgesehenen Emailleschlickers sind dagegen
- 100,0: Teile einer konventionellen Aluminiumemaillefritte, 5 - 7 Teile Korund mit einem mittleren Durchmesser von 50 µm,
- 4 - 6: Teile eines Edelstahlpulvers mit einem mittleren Durchmesser von 10 µm,
- 2: Teile Borsäure,
- 1: Teil Kalilauge,
- 1: Teil Wasserglas,
- 2 - 5: Teile Kohlenstofffasern
- 55: Teile Wasser
miteinander in einer Porzellanmühle zu einem Emailleschlicker verarbeitet worden.

Die einzelnen Komponenten des jeweiligen Emailleschlickers sind beispielsweise gemeinsam miteinander vermahlen worden, wobei durch Wahl des Zeitpunkts der Zugabe der jeweiligen Komponente unter Berücksichtigung der Materialeigenschaften die Korngröße bestimmt wurde, die die jeweilige Komponente am Ende des Mahlvorgangs aufwies.

Die Emailleschlicker sind auf die jeweils zugeordnete Außenfläche 12 und Innenfläche 14 des Grundkörpers 11 aufgebracht worden. Anschließend erfolgte das Einbrennen.

Infolge des Gehalts an blasenbildenden Komponenten wies die erhaltene Schicht 13 an der Außenfläche 12 des Grundkörpers 11 Poren auf, die optimale Wärmedämmeigenschaften der Schicht 13 gewährleisten. Die nahe der freien Außenseite der Schicht 13 vorhandenen oberflächennahen Poren waren dabei offen. Die an der Innenfläche 14 gebildete Schicht 15 wies dagegen aufgrund ihrer feuerfesten Bestandteile einen hohen Schmelzbereich auf, so dass sie den hohen thermischen Belastungen sicher standhält, denen sie aufgrund der Anströmung durch das heiße Abgas im Betrieb ausgesetzt ist. Der Einsatz 10 schirmt dementsprechend das ihn umgebende Gussmaterial des Zylinderkopfes 1 gegen eine übermäßige Erwärmung ab und stellt gleichzeitig sicher, dass das Abgas mit hoher Temperatur aus dem Zylinderkopf 1 austritt.

### BEZUGSZEICHEN

- 1: Zylinderkopf
- 2: Anlagefläche
- 3: Ausnehmungen
- 4': Längsseite (Einlassseite) des Zylinderkopfes 1
- 4": Längsseite (Auslassseite) des Zylinderkopfes 1
- 5: Einlasskanal
- 6: Auslasskanal
- 7: Mündung des Einlasskanals 5
- 8: Eingangsöffnung des Auslasskanals 6
- 9: Kühlkanäle
- 10: Einsatz
- 11: Grundkörper
- 12: Außenfläche des Grundkörpers 11 des Einsatzes 10
- 13: silikatische Schicht an der Außenfläche 12
- 14: Innenfläche des Grundkörpers 11 des Einsatzes 10
- 15: silikatische Schicht an der Innenfläche 14

## Patentansprüche

1. Gussteil, das aus einem Gussmaterial gegossen ist und in das ein im Betrieb von Gas durchströmter Kanal (6) eingeformt ist, wobei der Kanal (6) zumindest abschnittsweise durch einen separat vorgefertigten und in das Gussteil (1) eingegossenen Einsatz (10) aus Metall umgrenzt ist, **dadurch**
**gekennzeichnet, dass** der Einsatz (10) an seiner dem Gas zugeordneten Innenfläche (14) und an seiner dem Gussmaterial zugeordneten Außenfläche (12) zumindest jeweils abschnittsweise mit jeweils einer Glasur- oder Emailleschicht (13,15) beschichtet ist,
**dass** die jeweils an der Außenfläche (12) des Einsatzes (10) vorgesehene Schicht (13) Poren aufweist und **dass** der Gusswerkstoff beim Eingießen des Einsatzes (10) in Poren der Schicht (13) an der Außenfläche (12) eingedrungen ist.

2. Gussteil nach Anspruch 1, **dadurch**
**gekennzeichnet, dass** sich die Glasur- oder Emailleschichten an der Innen- und Außenseite des Einsatzes hinsichtlich ihrer Zusammensetzung oder ihrer Struktur unterscheiden.

3. Gussteil nach einem der voranstehenden Ansprüche,
dadurchgekennzeichnet, dass der Einsatz (10) rohrförmig ist.

4. Gussteil nach einem der voranstehenden Ansprüche,
**dadurch gekennzeichnet, dass** es ein Zylinderkopf (1) für einen Verbrennungsmotor ist und der Einsatz einem im praktischen Einsatz abgasführenden Kanal des Zylinderkopfs (1) zugeordnet ist.

5. Gussteil nach einem der Ansprüche 1 bis 3, **dadurch gekennzeichnet, dass** es ein Gehäuse für einen Abgasturbolader ist und der Einsatz einem im praktischen Einsatz abgasführenden Kanal dieses Gehäuses zugeordnet ist.

6. Gussteil nach einem der voranstehenden Ansprüche,
**dadurch gekennzeichnet, dass** das Gussmaterial ein Leichtmetall-Gussmaterial ist.

7. Einsatz zur Verwendung in einem gemäß einem der voranstehenden Ansprüche ausgebildeten Gussteil (1),
**dadurch gekennzeichnet, dass** er auf seiner dem von Gas durchströmten Kanal (6) zugeordneten Innenfläche (14) und seiner dem Gussmaterial des Gussteils (1) zugeordneten Außenfläche (12) jeweils zumindest abschnittsweise mit einer Glasur- oder Emailleschicht (13,15) beschichtet ist, **dass** die an der Außenfläche (12) des Einsatzes (10) vorgesehene Schicht (13) aus einer porösen Emaille besteht und **dass** die Schicht (13) an der Außenfläche des Einsatzes (10) offenporig ist.

8. Einsatz nach Anspruch 7, **dadurch**
**gekennzeichnet, dass** die an der Innenfläche (14) des Einsatzes (10) vorgesehene Schicht (15) aus einer Emaille besteht, die einen hochwarmfesten Bestandteil enthält.

9. Einsatz nach einem der Ansprüche 7 - 8, **dadurch gekennzeichnet, dass** er einen aus einem Leichtmetallwerkstoff bestehenden, die Glasur- oder Emailleschichten (13,15) tragenden Grundkörper (11) umfasst.

10. Einsatz nach Anspruch 9, **dadurch**
**gekennzeichnet, dass** der Grundkörper (11) aus einem Leichtmetallschaum besteht.

11. Einsatz nach einem der Ansprüche 7 - 10, **dadurch gekennzeichnet, dass** der Grundkörper aus mindestens zwei voneinander unabhängigen Teilen besteht, die jeweils unabhängig voneinander mit den Glasur- oder Emailleschichten beschichtet und anschließend zu dem Einsatz zusammengesetzt sind.

## Claims

1. Cast part which is cast from a casting material and into which a channel (6) is formed which gas flows through in operation, wherein the channel (6) is at least in sections delimited by a separately prefabricated metal insert (10) which is cast into the cast part (1), **characterised in that** the insert (10) on its inner surface (14) assigned to the gas and on its outer surface (12) assigned to the casting material is in each case at least in sections coated in each case with a glaze or enamel coat (13, 15), that the coat (13) in each case provided on the outer surface (12) of the insert (10) has pores and that the casting material during casting of the insert (10) has penetrated into pores of the coat (13) on the outer surface (12).

2. Cast part according to claim 1, **characterised in that** the glaze or enamel coats on the inside and outside of the insert are different with regard to their composition or their structure.

3. Cast part according to any one of the preceding claims, **characterised in that** the insert (10) is tubular.

4. Cast part according to any one of the preceding claims, **characterised in that** it is a cylinder head (1) for an internal combustion engine and the insert is assigned to a channel of the cylinder head (1) which in practical use conveys exhaust gas.

5. Cast part according to any one of Claims 1 to 3, **characterised in that** it is a housing for an exhaust gas turbocharger and the insert is assigned to a channel of this housing which in practical use conveys exhaust gas.

6. Cast part according to any one of the preceding claims, **characterised in that** the casting material is a light metal casting material.

7. Insert for use in a cast part (1) formed according to any one of the preceding claims, **characterised in that** on its inner surface (14) assigned to the channel (6) which gas flows through and on its outer surface (12) assigned to the casting material of the cast part (1) it is in each case at least in sections coated with a glaze or enamel coat (13, 15), that the coat (13) provided on the outer surface (12) of the insert (10) consists of a porous enamel and that the coat (13) is open-pored on the outer surface of the insert (10).

8. Insert according to Claim 7, **characterised in that** the coat (15) provided on the inner surface (14) of the insert (10) consists of an enamel which contains a high-temperature resistant constituent.

9. Insert according to any one of Claims 7 to 8, **characterised in that** it comprises a base body (11) consisting of a light metal material carrying the glaze or enamel coats (13, 15).

10. Insert according to Claim 9, **characterised in that** the base body (11) consists of a light metal foam.

11. Insert according to any one of Claims 7 to 10, **characterised in that** the base body consists of at least two parts which are independent from one another, which are coated with the glaze or enamel coats in each case independently from one another and are subsequently combined to form the insert.

## Revendications

1. Pièce coulée qui est coulée à partir d'une matière coulée et dans laquelle est formé un conduit (6) traversé en fonctionnement par un gaz, le conduit (6) étant délimité au moins par endroits par un insert métallique (10) préfabriqué séparément et coulé dans la pièce coulée (1), **caractérisée en ce que** l'insert (10) est revêtu au moins par endroits respectivement d'une couche de vernis ou d'émail (13, 15) sur sa surface intérieure (14) associée au gaz et sur sa surface extérieure (12) associée à la matière coulée, **en ce que** la couche (13) respectivement prévue sur la surface extérieure (12) de l'insert (10) présente des pores et **en ce que** le matériau coulé, lors du coulage de l'insert (10), pénètre dans les pores de la couche (13) sur la surface extérieure (12).

2. Pièce coulée selon la revendication 1, **caractérisée en ce que** les couches de vernis ou d'émail sur la surface intérieure et extérieure de l'insert se différencient en termes de leur composition ou de leur structure.

3. Pièce coulée selon l'une des revendications précédentes, **caractérisée en ce que** l'insert (10) est tubulaire.

4. Pièce coulée selon l'une des revendications précédentes, **caractérisée en ce qu'**elle est une culasse (1) pour un moteur à combustion interne et l'insert est associé à un conduit de la culasse (1) qui, en utilisation pratique, évacue les gaz d'échappement.

5. Pièce coulée selon l'une des revendications 1 à 3, **caractérisée en ce qu'**elle est un boîtier pour un turbocompresseur et l'insert est associé à un conduit de ce boîtier qui, en utilisation pratique, évacue les gaz d'échappement.

6. Pièce coulée selon l'une des revendications précédentes, **caractérisée en ce que** la matière coulée est unematière coulée en métal léger.

7. Insert destiné à être utilisé dans une pièce coulée (1) conçue selon l'une des revendications précédentes (1), **caractérisé en ce qu'**il est revêtu sur sa surface intérieure (14) associée au conduit (6) traversé par du gaz et sur sa surface extérieure (12) associée à la matière coulée de la pièce coulée (1), respectivement au moins par endroits, d'une couche de vernis ou d'émail (13, 15), **en ce que** la couche (13) prévue sur la surface extérieure (12) de l'insert (10) se compose d'un émail poreux, et **en ce que** la couche (13) sur la surface extérieure de l'insert (10) est à pores ouverts.

8. Insert selon la revendication 7, **caractérisé en ce que** la couche (15) prévue sur la surface intérieure (14) de l'insert (10) se compose d'un émail qui contient un composant résistant aux hautes températures.

9. Insert selon l'une des revendications 7 à 8, **caractérisé en ce qu'**il comporte un corps de base (11) se composant d'un matériau en métal léger et portant la couche de vernis ou d'émail (13, 15).

10. Insert selon la revendication 9, **caractérisé en ce que** le corps de base (11) se compose d'une mousse métallique légère.

11. Insert selon l'une des revendications 7 à 10, **caractérisé en ce que** le corps de base se compose d'au moins deux parties indépendantes l'une de l'autre, lesquelles sont revêtues, respectivement indépendamment l'une de l'autre, des couches de vernis ou d'émail et sont ensuite assemblées en l'insert.
